# EUROPEAN PATENT APPLICATION

(11) **EP 2 034 793 A1**
(43) Date of publication of application: **11.03.2009**
(21) Application number: 07116054.3
(22) Date of filing: 10.09.2007
(51) Int. Cl.: H04W 72/04

(54) **Location information delivery in telecommunication networks**

(71) Applicant: Nokia Siemens Networks Oy, 02610 Espoo (FI)
(72) Inventor: Arumaithurai, Mayutan, 81539, Munich (DE); Tschofenig, Hannes, 81735, Munich (DE)
(74) Representative: TBK-Patent

(57) **Abstract**

The present invention relates to a method, comprising transferring location information about a terminal from a client to a server in a network, accessing, by the server, a location information server using the location information transferred by the client, retrieving, by the server, a current position of the terminal based on said location information.

## Description

### Field of the invention

The invention is related to the area of location based services. In particular, the invention is related to methods for the transferring of Location Information (LI) of a mobile terminal from an access network (where the mobile node is attached to) to a server in the home network of the mobile terminal.

### Background

Wireless networks, like e.g. wireless local area network (WLAN) are being deployed in public places by a diverse set of operators. The home network may need to know the current location of the user in order to enable location-aware billing, location-aware authorization and location-aware services.

Enabling location-aware billing, location-aware authorization, location-aware services, etc. requires that an AAA (authentication, authorization and accounting) Home Server is able to get the location of a mobile node (MN) dynamically.

Currently, the location information is sent together with the identity of the user from the network access server (NAS, located for example in a visitor network) to the AAA home server of the user per value during the initial network attachment. That is, the AAA home server acquires a literal location object describing the location of a device. The AAA server may also request location information dynamically at a later stage via the RADIUS (remote authentication dial in user service) or Diameter protocol. The standardized location information is, however, quite restricted with respect to the size of location information and the location shapes given the size limitations in RADIUS/Diameter.

The HTTP enabled location delivery (HELD) protocol is a XML based application-layer protocol that is independent of the session-layer and is build on top of HTTP, TCP etc. According to HELD, a location may be retrieved from a location information server (LIS) by-value, and alternatively, the device may request that the LIS provides a location reference in the form of a location URI (Uniform Resource Indentifier) or a set of location URIs, allowing the device to distribute its location information by-reference. The LIS is an entity that is capable of determining the location of a terminal in the network and providing the location information.

Thus, the HELD protocol when used in combination with RADIUS/Diameter would allow relaxing the above mentioned constraints of the Radius/Diameter protocol, by for example sending location information request from the AAA server to the LIS to retrieve the location information of a device utilising the HELD protocol and a location reference. However, the HELD protocol cannot be used without an appropriate identifier of the terminal or user in order to determine the location of a terminal. These enhancements are described in this invention.

Further, in certain scenarios, there is a need for the AAA Home server to hide the real identity of the user from the access network. The AAA Home Server may use a Chargeable-User-Identity (CUI) as an alias or handle to the user's unique identity to maintain the user's anonymity. However, currently the HELD protocol does not support the use of the Chargeable-User-Identity as an identification method for a terminal.

### Summary

The present invention provides methods for providing location information to an AAA home server that overcome the above problems.

According to an aspect of the present invention, there is provided a method, comprising:
transferring location information about a terminal from a client to a server in a network,
accessing, by the server, a location information server using the location information transferred by the client,
retrieving, by the server, a current position of the terminal based on said location information.

According to further refinements of the above aspects,
- the transferring comprises representing the location information as indirect location information pointing to information associated to the terminal addressed by the indirect location information;
- accessing the location information server is based on a hypertext transfer protocol (HTTP), wherein the indirect location information is used at the location information server to obtain the current position of the terminal, and the obtained current position of the terminal is reported to the server;
- the indirect location information is transferred using the RADIUS/Diameter protocol;
- the location information of the terminal is transferred using a virtual identity of the terminal;
- the virtual identity is used at the location information server to obtain the current position of the terminal, and the obtained current position of the terminal is reported to the server;
- a chargeable-user-identity (CUI) may be used as the virtual identity of the terminal;
- the virtual identity is transferred using the RADIUS/Diameter protocol;
- the server is an authentication, authorization and accounting (AAA) server and the client is a network access server in an access network.

According to another aspect of the present invention, there is provided a server, comprising:
a transceiver configured to receive location information about a terminal from a client;
an accessing unit configured to access a location information server using the location information transferred by the client,
a retrieving unit configured to retrieve a current position of the terminal based on said location information.

According to further refinements of the above aspects,
- the transceiver is configured to receive the location information being represented as indirect location information pointing to information associated to the terminal addressed by the indirect location information;
- the accessing unit is configured to perform accessing the location information server based on a hypertext transfer protocol (HTTP), wherein the indirect location information is used at the location information server to obtain the current position of the terminal, and the retrieving unit is configured to retrieve the obtained current position of the terminal;
- the transceiver is configured to receive the indirect location information using the RADIUS/Diameter protocol;
- the transceiver is configured to receive the location information of the terminal being transferred using a virtual identity of the terminal;
- the accessing unit is configured to use the virtual identity to obtain the current position of the terminal from the location information server, and the retrieving unit is configured to retrieve the obtained current position of the terminal;
- a chargeable-user-identity (CUI) may be used as the virtual identity of the terminal.
- the transceiver is configured to receive the virtual identity using the Radius/Diameter protocol;
- the server is an authentication, authorization and accounting (AAA) server.

According to another aspect of the present invention, there is provided a client, comprising:
an obtaining unit configured to obtain location information about a terminal from a location information server;
a transferring unit configured to transfer the obtained location information to a server.

According to further refinements of the above aspects,
- the transferring of the location information is done using the RADIUS/Diameter protocol;
- the client is a network access server (NAS).

According to another aspect of the present invention, there is provided a location information server, comprising:
a data base storing location information about terminals associated with an identity of the terminals,
a sending unit configured to send location information of a terminal to a client,
an access unit configured to be accessed by a server,
the access unit being further configured to forward a current position of a terminal to the server based location information of the terminal provided by the server.

According to further refinements of the above aspects,
- the location information is a location by reference;
- the location information is a Chargeable User Identity (CUI) and the communication between the location information server and the server is based on the HTTP enabled location delivery (HELD) protocol.

According to another aspect of the present invention, there is provided a system comprising:
a server as defined above,
a client as defined above, and
a location information server as defined above.

According to another aspect of the present invention, there is provided a computer program product including a program comprising software code portions for performing, when the program is run on a processing device, a method as defined above.

For the purpose of the present invention to be described herein below, it should be noted that
- a terminal may for example be any kind of communication device, such as wired or wireless devices, e.g. personal computers, mobile phones or the like, irrespective of a specific standard to which these conform;
- method steps likely to be implemented as (low level) software code portions and being run using a processor at one of the server/terminal entities, are software code independent and can be specified using any known or future developed programming language as long as the functionality defined by the method steps is preserved;
- generally, any method step is suitable to be implemented as software or by hardware without changing the idea of the present invention in terms of the functionality implemented;
- method steps and/or devices likely to be implemented as hardware components at one of the entities are hardware independent and can be implemented using any known or future developed hardware technology or any hybrids of these, such as MOS (Metal Oxide Semiconductor), CMOS (Complementary MOS), BiCMOS (Bipolar CMOS), ECL (Emitter Coupled Logic), TTL (Transistor Transistor Logic), etc., using for example ASIC (Application Specific Integrated Circuit) components or DSP (Digital Signal Processor) components, as an example;
- devices can be implemented as individual devices, but this does not exclude that they are implemented in a distributed fashion throughout the system, as long as the functionality of the device/system is preserved;
- respective elements, according to present embodiments can be implemented by any known means, either in hardware (DSP, microprocessor, microcontroller, ASIC, FPGA, etc) and/or software, respectively, as long as it is adapted to perform the described functions of the respective parts.

### Brief description of the drawings

The present invention is described herein below with reference to the accompanying drawings, wherein:
Fig. 1 is an example of a message exchange according to an aspect of the present invention that shows a NAS making a Location by Reference available to the AAA server.
Fig. 2 is an example of a message exchange according to another aspect of the present invention where a Chargeable User Identity is utilized in order to allow the AAA server to obtain location information about a terminal.
Fig. 3 is block diagram of a system comprising a server, a client and a location information server according to an aspect of the present invention.

### Detailed description of preferred embodiments

The invention will be described herein below with reference to the accompanying drawings.

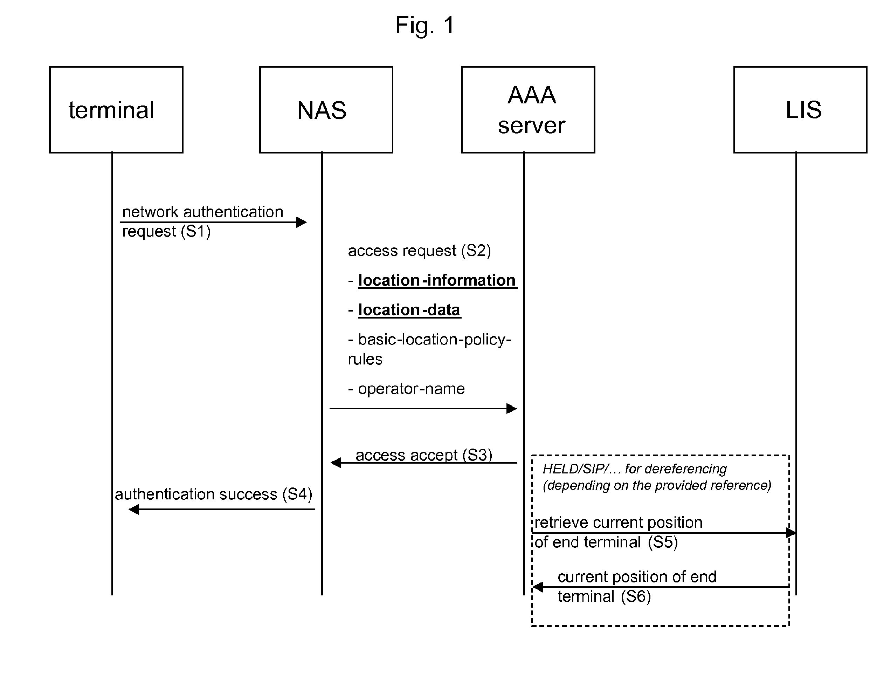

Fig. 1 is an example of a message exchange for delivering location information during the network access authentication and authorization procedure. Upon a network authentication request (S1) from an access network client (terminal), the Network Access Server (NAS) submits a RADIUS/Diameter Access-Request message (S2) to the AAA server that contains location information attributes among other required attributes. In a scenario in which the NAS that serves as the AAA client and the AAA server have agreed to exchange the LbyR during network access authentication and authorization process, the NAS may send the LbyR without the server explicitly asking for it if an out-of-band agreement between the two networks exist. Alternatively, the AAA server may also ask for the reference some time later after evaluating the user's privacy policies.

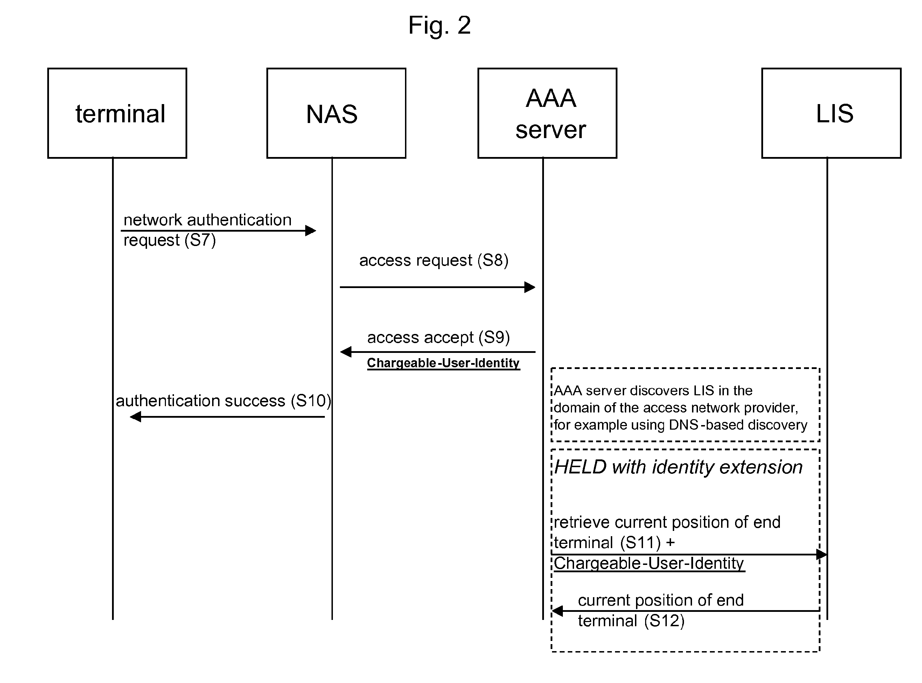

The access request message shown in Fig. 2 includes Location-Information, Location-Data, Basic-Location-Policy-Rules and Operator-Name Attributes.

According to an aspect of the present invention, the LbyR is included in the Location-Data-Attribute. The LbyR can contain any information that could be used to identify the terminal. The LbyR can be based on an HTTP, HTTPS or SIP schema. Some examples are:

### Example #1:

Location-Data =
<2>https://ls.example.com:9768/357yc6s64ceyoiuy5ax3o

### Example #2:

Location-Data =
<2><sips:9769+357yc6s64ceyoiuy5ax3o@ls.example.com>

Further, according to Fig. 1, the AAA server sends an access-accept message to the NAS (S3) and the NAS sends an authentication success message to the terminal (S4).

After receiving a location information by reference, the AAA server can then retrieve the current position of the terminal via HTTP (for example the HELD protocol), SIP (or any other protocol depending on the provided location reference) from the LIS (S5, S6), as described above. There is an out-of-band interaction between the client and the LIS to make the virtual identity available to the LIS and potentially to report the location of the terminal to the LIS. However, this interaction is not shown in Fig. 1.

Fig. 2 shows a deployment scenario where operator networks are targeted that already use a form of "virtual identifier" that can be utilized as a location reference. If an access network and the home network support the Chargeable-User-Identity (CUI) instead of the location information by reference, also a CUI can be used to retrieve information (e.g. location information) about a terminal from e.g. the LIS. The CUI is a unique identity provided by the home network that acts as an alias or handle to the real user identity but provides user anonymity. Thus, the identity of the user can be hidden from the access network (and intermediate AAA broker networks).

As shown in Fig. 2 the message exchange starts with the terminal attaching to the network and starting the network access authentication procedure (step S7). This triggers an exchange between the NAS and the user's AAA server (step S8). In step S9 it is indicated that the CUI mechanism (or any other type of identifier used as alias of handle for the user identity) is supported by allowing the AAA server to provide the Chargeable-User-Identity to the NAS in the Access-Accept. The NAS and the LIS are afterwards able to correlate the CUI with the terminal. The network access authentication procedure is concluded with step S10. Later, when the AAA server needs to learn the location of the terminal it issues a request to the LIS with step S11, which could be for example a request using the HELD protocol. This step already assumes that the AAA server discovered the LIS in the access network (for example, via the DNS-based discovery mechanism). In the request of step S11 (e.g. done via the HELD protocol) the CUI is added as a parameter in the identity extensions. The LIS receiving the request can then use the CUI to retrieve the location information of the terminal. When it obtained the location it provides a response in message S12.

Since the exchange between the LIS and the AAA server does not involve intermediate nodes and is typically confidentiality protected (e.g., using TLS) no other nodes are able to inspect the user's location information providing superior security compared to the delivery via RADIUS or Diameter where intermediate AAA proxies or brokers are able to observe the exchange due to the lack of end-to-end security capabilities in today's AAA protocols.

When a terminal/user identifier (e.g. the CUI) is used in the HELD protocol, then an extension is necessary to the schema specified in the HELD-IDENTITY-EXTENSIONS [I-D.winterbottom-geopriv-held-identity-extensions] document. Such an extension could be as shown in the following:

```
 <?xml version="1.0"?>
 <xs:schema
 targetNamespace="urn:ietf:params:xml:ns:geopriv:held:deviceIdentifiers"
 xmlns:xs="http://www.w3.org/2001/XMLSchema"
 xmlns:heldDI="urn:ietf:params:xml:ns:geopriv:held:deviceIdentifiers"
 xmlns:xml="http://www.w3.org/XML/1998/namespace"
 elementFormDefault="qualified" attributeFormDefault="unqualified">
 <!-- Chargeable-User-Identity -->
   <xs:simpleType name="cui">
    <xs:restriction base="xs:token">
      <xs:pattern value="([a-zA-ZO-9]*)"/>
    </xs:restriction>
   </xs:simpleType>
 
 </xs:schema>
```

An example of usage is shown below:

```
 <locationRequest xmlns="urn:ietf:params:xml:ns:geopriv:held"
                   responseTime="2">
       <heldDevice
       xmlns="urn:ietf:params:xml:ns:geopriv:held:deviceIdentifiers">
              <cui>someone@example.com</cui>
         </heldDevice>
    </locationRequest>
```

When a CUI is already used in the network then no further enhancements are necessary to RADIUS or Diameter but the HELD lookup mechanism needs to be extended (see Fig. 2). In the other case, the location reference needs to be added to RADIUS or Diameter but the protocol interaction between the AAA server and the LIS remains unmodified (see Fig. 1).

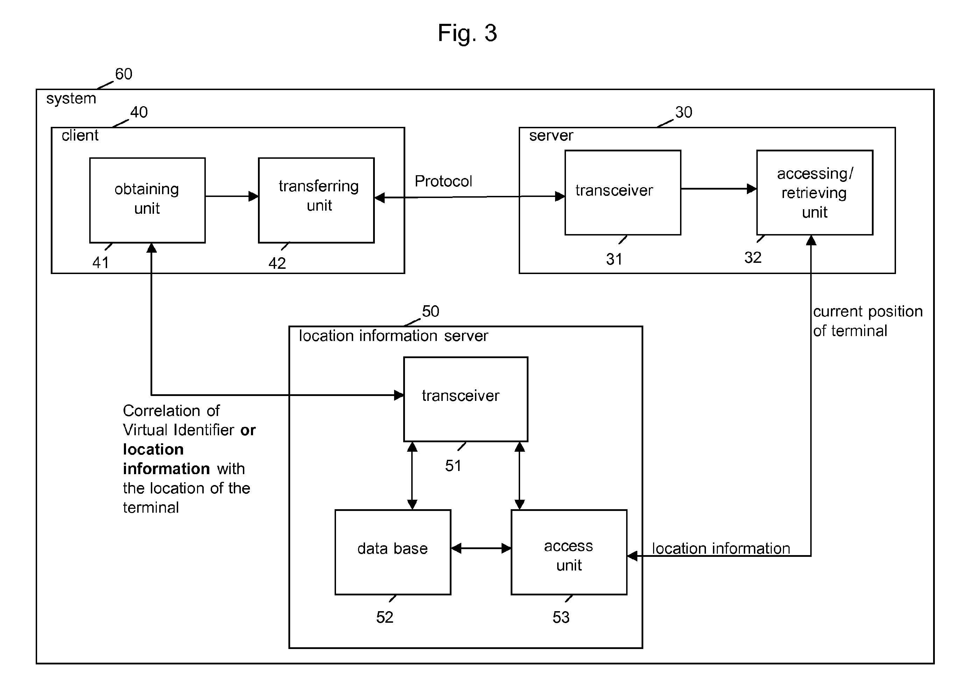

Fig. 3 is a block diagram of a system according to an aspect of the present invention. As shown in Fig. 3, the system 60 comprises a server 30, a client 40 and a location information server 50. The server 30 comprises a transceiver 31 in order to receive messages from the client 40, e.g. the NAS, like e.g. an access request message, and to request information from the client. The server 30 further comprises an accessing/retrieving unit 32 that uses the location information to access a location information server 50 and to retrieve the current position of a terminal.

The client 40 comprises an obtaining unit 41 for obtaining location information about a terminal from the location information server 50 and a transferring unit 42 for transferring the obtained location information to the server 30.

The location information server 50 comprises a transceiver 51 for sending location information about a terminal to a client 40. The location information is stored a data base 52. The data base 52 stores location information about a plurality of terminals in the network associated with an identity of the terminals. The location information server 50 further comprises an access unit 53 which can be accessed by a server 30 in order to retrieve a current position of a terminal based on the location information. Then, the access unit 53 forwards the current position of a terminal to the server 30.

The processing of all components comprised in the server 30, the client 40, and the location information server 50 is either controlled by a central processing unit (CPU) or by separate processing units, respectively, e.g. DSPs or the like, that are not shown in Fig. 3.

In the foregoing description of the server, the client, and the location information server, only the units that are relevant for understanding the principles of the invention have been described using functional blocks. The server, the client, and the location information server may comprise further units that are necessary for their operation as server, client, and location information server, respectively. However, a description of these units is omitted in this specification. The arrangement of the functional blocks of the network devices is not construed to limit the invention, and the functions may be performed by one block or further split into sub-blocks.

In view of the foregoing description it will be evident to a person skilled in the art that various modifications may be made within the scope of the invention.

## Claims

1. A method, comprising:
transferring location information about a terminal from a client to a server in a network,
accessing, by the server, a location information server using the location information transferred by the client,
retrieving, by the server, a current position of the terminal based on said location information.

2. The method according to claim 1,
the transferring comprising representing the location information as indirect location information pointing to information associated to the terminal addressed by the indirect location information.

3. The method according to claim 1 or 2, wherein
accessing the location information server is based on a hypertext transfer protocol (HTTP), wherein the indirect location information is used at the location information server to obtain the current position of the terminal, and
the obtained current position of the terminal is reported to the server.

4. The method according to anyone of the preceding claims, wherein
the indirect location information is transferred using the RADIUS/Diameter protocol.

5. The method according to claim 1,
the location information of the terminal being transferred using a virtual identity of the terminal.

6. The method according to claim 5, wherein
the virtual identity is used at the location information server to obtain the current position of the terminal, and
the obtained current position of the terminal is reported to the server.

7. The method according to claim 5 or 6, wherein
a chargeable-user-identity (CUI) is used as the virtual identity of the terminal.

8. The method according to anyone of claims 5 to 7, wherein
the virtual identity is transferred using the RADIUS/Diameter protocol.

9. The method according to anyone of the preceding claims, wherein
the server is an authentication, authorization and accounting (AAA) server and the client is a network access server in an access network.

10. A server, comprising:
a transceiver configured to receive location information about a terminal from a client;
an accessing unit configured to access a location information server using the location information transferred by the client,
a retrieving unit configured to retrieve a current position of the terminal based on said location information.

11. The server according to claim 10, wherein
the transceiver is configured to receive the location information being represented as indirect location information pointing to information associated to the terminal addressed by the indirect location information.

12. The server according to claim 10 or 11, wherein
the accessing unit is configured to perform accessing the location information server based on a hypertext transfer protocol (HTTP), wherein the indirect location information is used at the location information server to obtain the current position of the terminal, and
the retrieving unit is configured to retrieve the obtained current position of the terminal.

13. The server according to anyone of the claims 10 to 12, wherein
the transceiver is configured to receive the indirect location information using the RADIUS/Diameter protocol.

14. The server according to claim 10, wherein
the transceiver is configured to receive the location information of the terminal being transferred using a virtual identity of the terminal.

15. The server according to claim 14, wherein
the accessing unit is configured to use the virtual identity to obtain the current position of the terminal from the location information server, and
the retrieving unit is configured to retrieve the obtained current position of the terminal.

16. The server according to claim 14 or 15, wherein
a chargeable-user-identity (CUI) is used as the virtual identity of the terminal.

17. The server according to anyone of claims 14 to 16, wherein
the transceiver is configured to receive the virtual identity using the RADIUS/Diameter protocol.

18. The server according to anyone of the preceding claims, wherein
the server is an authentication, authorization and accounting (AAA) server.

19. A client, comprising:
an obtaining unit configured to obtain location information about a terminal from a location information server;
a transferring unit configured to transfer the obtained location information to a server.

20. The client according to claim 19, wherein the transferring of the location information is done using the RADIUS/Diameter protocol.

21. The client according to claim 19 or 20, wherein the client is a network access server (NAS).

22. A location information server, comprising:
a data base storing location information about terminals associated with an identity of the terminals,
a transceiver configured to send location information of a terminal to a client,
an access unit configured to be accessed by a server,
the access unit being further configured to forward a current position of a terminal to the server based on the location information of the terminal provided by the server.

23. The location information server according to claim 22, wherein the location information is a location by reference.

24. The location information server according to claim 22, wherein the location information is a Chargeable User Identity (CUI) and the communication between the location information server and the server is based on the HTTP enabled location delivery (HELD) protocol.

25. A system comprising:
a server according to anyone of claims 10 to 18,
a client according to anyone of claims 19 to 21, and
a location information server according to anyone of claims 22 to 24.

26. A computer program product including a program comprising software code portions for performing, when the program is run on a processing device, a method according to anyone of claims 1 to 9.
